# EUROPÄISCHE PATENTSCHRIFT

(11) **EP 4 118 390 B1**
(45) Veröffentlichungstag und Bekanntmachung des Hinweises auf die Patenterteilung: **23.08.2023**
(21) Anmeldenummer: 21709447.3
(22) Anmeldetag: 09.03.2021
(51) Int. Cl.: F27B 7/38, F23L 13/06, F27D 99/00, F27D 15/02, F23L 15/00

(54) **KÜHLER ZUM KÜHLEN VON SCHÜTTGUT, INSBESONDERE ZEMENTKLINKER**
COOLER FOR COOLING BULK MATERIAL, IN PARTICULAR CEMENT CLINKER
REFROIDISSEUR POUR REFROIDIR UN MATÉRIAU EN VRAC, EN PARTICULIER DU CLINKER DE CIMENT

(30) Priorität: 13.03.2020 BE 202005177; 13.03.2020 DE 102020203289
(43) Veröffentlichungstag der Anmeldung: 18.01.2023
(73) Patentinhaber: thyssenkrupp Polysius GmbH, 45143 Essen (DE); HeidelbergCement AG, 69120 Heidelberg (DE); Dyckerhoff GmbH, 65203 Wiesbaden (DE); Vicat SA, 38080 L'Isle-d'Abeau (FR); SCHWENK Zement GmbH & Co. KG, 89077 Ulm (DE)
(72) Erfinder: RICKERT, Peter, 59505 Bad Sassendorf (DE); MORGENROTH, Sebastian, 59302 Oelde (DE); KÖNNING, Ludwig, 59227 Ahlen (DE); LAMPE, Karl, 59320 Ennigerloh (DE); STREFFING, Michael, 59510 Lippetal (DE); WILLMS, Eike, 44309 Dortmund (DE); ADLER, Klaus, 33378 Rheda-Wiedenbrück (DE); SCHULZE BERND, Alex, 48324 Sendenhorst (DE)
(74) Vertreter: thyssenkrupp Intellectual Property GmbH
(86) Internationale Anmeldenummer: PCT/EP2021/055921
(87) Internationale Veröffentlichungsnummer: WO 2021/180723

(56) Entgegenhaltungen:
- EP-A1- 1 195 565
- DE-A1-102018 206 673
- DE-C- 856 190
- US-A- 1 995 845

## Beschreibung

Die Erfindung betrifft einen Kühler zum Kühlen von Schüttgut mit einer Trennvorrichtung zum Trennen von Kühlgasströmen innerhalb des Kühlers.

Aus dem Stand der Technik ist es bekannt, Kühlluft zum Kühlen von Zementklinker in den Drehrohrofen zu führen und diese als Verbrennungsluft zu nutzen. Zur Reduzierung der Abgasmenge und um auf aufwändige Reinigungsverfahren verzichten zu können ist es beispielsweise aus der DE 10 2018 206 673 A1 bekannt, ein möglichst sauerstoffreiches Verbrennungsgas zu verwenden, sodass der CO2-Gehalt in dem Abgas hoch ist. Die DE 10 2018 206 673 A1 offenbart das Einleiten eines sauerstoffreichen Gases in den Kühlereinlassbereich zur Vorwärmung des Gases und Kühlung des Klinkers. In dem hinteren Bereich des Kühlers wird üblicherweise als Kühlgas Luft verwendet.

Nachteilig bei dieser Konstruktion ist es, dass eine Vermischung der Gasströme des Kühleinlassbereichs und des hinteren Bereichs erfolgt und die DE 10 2018 206 673 A1 keine zuverlässige Möglichkeit der Trennung dieser Gasströme angibt, bei welcher insbesondere die Förderung des Schüttguts innerhalb des Kühlers nicht gestört wird.

Davon ausgehend ist es Aufgabe der vorliegenden Erfindung, einen Kühler bereitzustellen, der die oben genannten Nachteile überwindet.

Diese Aufgabe wird erfindungsgemäß durch einen Kühler mit den Merkmalen des unabhängigen Vorrichtungsanspruchs 1 gelöst. Vorteilhafte Weiterbildungen ergeben sich aus den abhängigen Ansprüchen.

Ein Kühler zum Kühlen von Schüttgut, insbesondere Zementklinker, umfasst nach einem ersten Aspekt einen Kühlgasraum, durch den ein Kühlgasstrom zum Kühlen des Schüttguts im Querstrom strömbar ist, und eine Fördereinrichtung zum Fördern des Schüttguts in Förderrichtung durch den Kühlgasraum. Der Kühlgasraum umfasst einen ersten Kühlgasraumabschnitt mit einem ersten Kühlgasstrom und einen sich in Förderrichtung des Schüttguts an diesen anschließenden zweiten Kühlgasraumabschnitt mit einem zweiten Kühlgasstrom. Der Kühler weist eine Trennvorrichtung zur gastechnischen Trennung der Kühlgasraumabschnitte voneinander auf, wobei die Trennvorrichtung eine Mehrzahl von Abdichtungselementen aufweist.

Die Abdichtungselemente sind nebeneinander angeordnet, sodass sie den Querschnitt des Kühlgasraums insbesondere vollständig überdecken. Beispielsweise sind die Abdichtungselemente plattenförmig, kubisch oder quaderförmig ausgebildet und weisen vorzugsweise eine Kantenlänge von 10 mm bis 40 mm, insbesondere 40 mm bis 150 mm auf.

Bei dem Kühler handelt es sich vorzugsweise um einen Klinkerkühler, der beispielsweise im Anschluss an einen Ofen, insbesondere Drehrohrofen zur Herstellung von Zementklinker angeordnet ist.

Der Kühlgasraum ist vorzugsweise nach oben durch eine Kühlgasraumdecke und nach unten durch einen dynamischen und/ oder statischen Rost, vorzugsweise das auf diesem liegende Schüttgut, begrenzt. Bei dem Kühlgasraum handelt es sich insbesondere um den gesamten von Kühlgas durchströmte Raum des Kühlers oberhalb des Schüttguts. Der Kühlgasstrom strömt durch den dynamischen und/ oder statischen Rost, insbesondere durch die Fördereinrichtung, durch das Schüttgut und in den Kühlgasraum. Der erste Kühlgasraumabschnitt ist vorzugsweise in Strömungsrichtung des zu kühlenden Schüttguts direkt hinter dem Kühlereinlass angeordnet. Vorzugsweise fällt das Schüttgut aus einem dem Kühler vorgeschalteten Drehrohrofen in den ersten Kühlgasraumabschnitt.

Der erste Kühlungsraumabschnitt weist vorzugsweise einen statischen Rost und/ oder dynamischen Rost auf, der unterhalb des Ofenauslaufs angeordnet ist, sodass das aus dem Drehrohrofen austretende Schüttgut schwerkraftbedingt auf den statischen Rost fällt. Bei dem statischen Rost handelt es sich beispielsweise um ein in einem Winkel zur Horizontalen von 10° bis 35°, vorzugsweise 12° bis 33°, insbesondere 13° bis 21° angestellten Rost, der von unten mit dem ersten Kühlgasstrom durchströmt wird. In den ersten Kühlgasraumabschnitt strömt vorzugsweise ausschließlich der erste Kühlgasstrom, der beispielsweise mittels eines Ventilators beschleunigt wird. Der zweite Kühlgasraumabschnitt schließt sich in Förderrichtung des Schüttguts an den ersten Kühlgasraumabschnitt an und wird von dem ersten Kühlgasraumabschnitt mittels der Trennvorrichtung gastechnisch getrennt. In den zweiten Kühlgasraumabschnitt strömt vorzugsweise ausschließlich der zweite Kühlgasstrom, der beispielsweise mittels eines Ventilators beschleunigt wird.

Der zweite Kühlgasraumabschnitt weist vorzugsweise einen dynamischen Rost zur Förderung des Schüttguts durch den Kühlgasraum auf. Der dynamische Rost umfasst eine Fördereinheit zum Transport des Materials in Förderrichtung, wobei die Fördereinheit beispielsweise einen von Kühlgas durchströmbaren Belüftungsboden mit einer Mehrzahl von Durchlassöffnungen zum Einlassen von Kühlgas aufweist. Das Kühlgas wird beispielsweise von unterhalb des Belüftungsbodens angeordneten Ventilatoren bereitgestellt, sodass das zu kühlende Schüttgut im Querstrom zur Förderrichtung mit einem Kühlgas, wie beispielsweise Kühlluft, durchströmt wird. Der Belüftungsboden bildet vorzugsweise eine Ebene aus, auf der das Schüttgut aufliegt. Die Fördereinheit weist des Weiteren vorzugsweise eine Mehrzahl von in Förderrichtung und entgegen der Förderrichtung bewegbaren Förderelementen auf. Vorzugsweise wird der Belüftungsboden teilweise oder vollständig durch Förderelemente ausgebildet, die nebeneinander angeordnet, eine Ebene zur Aufnahme des Schüttguts ausbilden.

Vorzugsweise weist der Bereich des dynamischen und/ oder des statischen Rosts in der Nähe der Trennvorrichtung keine Durchlassöffnungen zum Einlassen von Kühlluft auf, sodass das Schüttgut in der Nähe und unterhalb der Trennvorrichtung nicht belüftet wird.

Die Trennvorrichtung ist vorzugsweise zwischen dem ersten Kühlgasraumabschnitt und dem zweiten Kühlgasraumabschnitt angeordnet. Beispielsweise weisen die Abdichtungselemente eine kubische, kugelförmige oder plattenförmige Gestalt auf. Vorzugsweise weisen die Abdichtungselemente eines Aufhängungselements alle die gleiche Gestalt auf. Insbesondere ist die Höhe jedes der Abdichtungselemente wesentlich geringer als der Abstand zwischen der Fördereinheit und der Decke des Kühlgasraums, vorzugsweise geringer als der Abstand zwischen dem Schüttgut und der Decke des Kühlgasraums, sodass vorzugsweise eine Vielzahl von Abdichtungselementen in vertikaler Richtung nebeneinander, beispielsweise übereinander, an einem Aufhängungselement angebracht sind. Vorzugsweise sind eine Mehrzahl von Aufhängungselementen nebeneinander angeordnet und bilden die Trennvorrichtung aus.

Eine solche Trennvorrichtung ermöglicht eine zuverlässige Trennung des Kühlgasstroms innerhalb des ersten Kühlgasraumabschnitts von dem Kühlgasstrom innerhalb des zweiten Kühlgasraumabschnitts.

Die Abdichtungselemente sind vorzugsweise möglichst gasdicht miteinander verbunden. Vorzugsweise ist jedes Abdichtungselement mit einem benachbarten Abdichtungselement derart angeordnet, insbesondere miteinander verbunden oder liegen aneinander an, dass zwischen den Abdichtungselementen kein Kühlgasstrom strömbar ist. Beispielsweise ist die Summe der Spaltflächen zwischen zwei benachbarten und aneinander anliegenden Abdichtungselementen kleiner als 10%, vorzugsweise kleiner 5% und höchstvorzugsweise kleiner 3% ist. Die Verbindung zweier benachbarter Abdichtungselemente ist vorzugsweise zu etwa 90%, insbesondere 95%, vorzugsweise 97% gasdicht.

Gemäß einer ersten Ausführungsform weist jedes Abdichtungselement jeweils eine Mehrzahl von Verbindungsbereichen auf, die jeweils an zumindest einem Verbindungsbereich eines benachbarten Abdichtungselements anliegen. Bei den Verbindungsbereichen handelt es sich vorzugsweise um Oberflächenbereiche des Abdichtungselements. Die Verbindungsbereiche bilden insbesondere zumindest teilweise oder vollständig die Oberfläche des jeweiligen Abdichtungselements aus.

Die aneinander anliegenden Verbindungsbereiche benachbarter Abdichtungselemente sind gemäß einer weiteren Ausführungsform zumindest teilweise oder vollständig komplementär ausgebildet. Beispielsweise weist ein Verbindungsbereich eines Abdichtungselements einen Vorsprung auf und ein Verbindungsbereich eines zu diesem, benachbarten Abdichtungselements weist eine Aussparung auf, die in der Gestalt dem Vorsprung entspricht.

Gemäß einer weiteren Ausführungsform ist jedes Abdichtungselement über einen seiner Verbindungsbereiche mit zumindest einem benachbarten Abdichtungselement fest, insbesondere formschlüssig, verbunden. Vorzugsweise sind in vertikaler Richtung nebeneinander angeordnete Abdichtungselemente zumindest in vertikaler Richtung formschlüssig miteinander verbunden, wobei die Abdichtungselemente insbesondere nicht über ein Aufhängungselement miteinander verbunden sind. Die in vertikaler Richtung nebeneinander angeordnete Abdichtungselemente sind vorzugsweise drehbeweglich miteinander verbunden. Es ist ebenfalls denkbar, dass ein Verbindungsbereich mit einer Mehrzahl von Verbindungsbereichen eines benachbarten Abdichtungselements direkt verbunden ist, vorzugswiese an diesen anliegt.

Gemäß einer weiteren Ausführungsform weist die Trennvorrichtung eine Mehrzahl von Abdichtungselementen einer ersten Gestalt und eine Mehrzahl von Abdichtungselementen einer zweiten Gestalt auf. Beispielsweise sind an einem Abdichtungselement der ersten Gestalt eine Mehrzahl von Abdichtungselementen der zweiten Gestalt angebracht. Das Abdichtungselement der ersten Gestalt ist beispielsweise um ein Vielfaches länger als das Abdichtungselement der zweiten Gestalt. Unter der Länge ist beispielsweise die Erstreckung quer zur Förderrichtung des Schüttguts zu verstehen. Vorzugsweise ist das Abdichtungselement der ersten Gestalt lediglich in einem oberen Bereich der Trennvorrichtung, vorzugsweise in der oberen Hälfte der Trennvorrichtung angeordnet.

Die Trennvorrichtung weist zumindest ein Aufhängungselement auf, an dem eine Mehrzahl von Abdichtungselementen angebracht ist. Das Aufhängungselement dient zum Aufhängen, insbesondere Befestigen, der Abdichtungselemente innerhalb des Kühlgasraums. Vorzugsweise ist das Aufhängungselement flexibel. Beispielsweise weist die Trennvorrichtung eine Mehrzahl von Aufhängungselementen auf, die beispielsweise parallel zueinander angeordnet sind.

Die Abdichtungselemente sind beispielsweise aus einem hochtemperaturbeständigen Material, insbesondere aus Keramik und/ oder hochtemperaturbeständigen Metallen, wie beispielsweise hochwarmfester Stahl oder Nickelbasislegierung, ausgebildet. Dadurch weist die Trennvorrichtung eine hohe Lebensdauer und Verschleißfestigkeit auf.

Bei dem Aufhängungselement handelt es sich beispielsweise um ein flexibles Element. Gemäß einer weiteren Ausführungsform umfasst das Aufhängungselement eine Kette, einen Stab, ein Seil, eine Drahtmatte und/ oder ein Rohr. Vorzugsweise erstreckt sich das Aufhängungselement mittig, insbesondere durch den Schwerpunkt des jeweiligen Abdichtungselements. Insbesondere weist jedes Abdichtungselement eine Bohrung auf, durch welche sich das Aufhängungselement erstreckt, und ist gemäß einer weiteren Ausführungsform relativ zu dem Aufhängungselement bewegbar an diesem angebracht. Insbesondere sind die Abdichtungselemente in vertikaler Richtung entlang des Aufhängungselements relativ zu diesem bewegbar. Dies ermöglicht insbesondere im Verschleißfall ein schwerkraftbedingtes Nachrutschen des benachbarten Abdichtungselements, sodass ein Austausch der Trennvorrichtung bei dem Verschleiß, insbesondere bei einem Bruch beispielsweise durch Verschleiß, eines Abdichtungselements nicht notwendig ist. Die Bohrungen in den Abdichtungselementen können so gestaltet sein, dass sie den Durchtritt von Kühlluft und/ oder eines Trenngases in Längsrichtung zu den Abdichtungselementen ermöglichen und am Ende der Abdichtungselemente in den zweiten Kühlgasraum austreten.

Die Trennvorrichtung erstreckt sich über den gesamten Querschnitt des Kühlgasraums. Vorzugsweise erstreckt sich die Trennvorrichtung quer zur Förderrichtung des Schüttguts, insbesondere in einem Winkel von etwa 90° zur Förderrichtung. Der Querschnitt des Kühlgasraums des Kühlers wird vorzugsweise vollständig oder mindestens zu 98% von der Trennvorrichtung bedeckt, sodass ein Gasaustausch zwischen den Kühlgasraumabschnitten des Kühlgasraums nicht oder nur in einem sehr geringen, vernachlässigbaren, Umfang möglich ist.

Die Trennvorrichtung liegt insbesondere zumindest teilweise auf dem Schüttgut auf. Vorzugsweise liegt die Trennvorrichtung mit dem unteren Ende, auf der Oberfläche des Schüttguts auf und schmiegt sich insbesondere an die Oberfläche des Schüttguts an. Im Betrieb des Kühlers wird das Schüttgut in Förderrichtung transportiert, wobei es unterhalb der Fördereinrichtung gleitet und durch das teilweise Aufliegen der Trennvorrichtung auf dem Schüttgut ein möglichst gasdichter Abschluss der Kühlgasraumabschnitte gewährleistet ist.

Beispielsweise liegen zumindest ein oder alle Abdichtungselemente auf der Oberfläche des Schüttguts auf. Die Abdichtungselemente sind daher im Betrieb des Kühlers einem hohen Verschleiß durch den Abrieb an dem Schüttgut und die hohe Temperaturbelastung innerhalb des Kühlgasraums ausgesetzt.

Die Trennvorrichtung umfasst vorzugsweise zumindest einen Abschnitt, der auf der Oberfläche des Schüttguts aufliegt und zumindest einen weiteren Abschnitt, der sich quer zur Förderrichtung des Schüttguts, insbesondere in einem Winkel von etwa 90° zur Förderrichtung, erstreckt. Vorzugsweise ist der obere, an der Decke angebrachte, Bereich der Trennvorrichtung starr und der untere Abschnitt bewegbar, insbesondere schwenkbar (um eine horizontale quer zur Förderrichtung angebrachte Drehachse) angebracht. Es ist ebenfalls denkbar, dass es sich bei dem oberen Bereich der Trennvorrichtung um eine Platte, die fest oder schwenkbar angebracht ist, und bei dem unteren Teil um einen eine Mehrzahl von Abdichtungselementen umfassenden Bereich handelt, der auf dem Schüttgut aufliegt.

Gemäß einer weiteren Ausführungsform besteht der erste Kühlgasstrom aus reinem Sauerstoff oder einem Gas mit einem Anteil von weniger als 35 Vol%, insbesondere weniger als 21 Vol%, vorzugsweise 15 Vol% oder weniger Stickstoff und einem Anteil von 50 Vol% oder mehr Sauerstoff. Der erste Kühlgasraumabschnitt schließt sich vorzugsweise direkt an einen Ofenkopf eines dem Kühler vorgeschalteten Drehrohrofens an, sodass das Kühlgas in dem Kühler erwärmt und anschließend in den Drehrohrofen strömt und als Verbrennungsluft verwendet wird. Bei dem zweiten Kühlgasstrom handelt es sich beispielsweise um Luft.

Das Aufhängungselement ist beispielsweise an der Decke des Kühlgasraums angebracht. Insbesondere erstreckt sich das Aufhängungselement bis zu der Schüttgutoberfläche. Vorzugsweise ist die Trennvorrichtung mittels eines Befestigungsmittels an der Decke angebracht. Das Befestigungsmittel ist vorzugsweise derart ausgebildet, dass es eine Schwenkbewegung, vorzugsweise um eine horizontale, quer zur Förderrichtung angeordnete Drehachse, erlaubt. Beispielsweise ist das Befestigungsmittel eine schwenkbare Klemme zum Anbringen des Aufhängungselements an der Decke. Damit wird eine Überdeckung des gesamten Querschnitts des Kühlgasraums durch die Trennvorrichtung sichergestellt. Vorzugsweise ist die Trennvorrichtung schwenkbar, insbesondere um eine horizontale quer zur Förderrichtung angeordnete Achse, an der Decke angebracht. Insbesondere ist das Aufhängungselement an der Decke des Kühlgasraums zwischen dem ersten und dem zweiten Kühlgasraum angebracht. Beispielsweise ist der Bereich der Decke, an dem die Trennvorrichtung angebracht ist, abgesenkt oder als Trennwand ausgebildet, die in den Kühlgasraum hineinragt.

Jede Trennvorrichtung weist gemäß einer weiteren Ausführungsform eine Mehrzahl von Aufhängungselementen mit jeweils einer Mehrzahl von Abdichtungselementen auf. Die Aufhängungselemente sind beispielsweise über die gesamte Breite des Kühlgasraums angebracht. Insbesondere sind die Aufhängungselemente gleichmäßig zueinander beabstandet. Vorzugsweise sind die Aufhängungselemente derart angebracht, dass sich die Abdichtungselemente benachbarter Aufhängungselemente berühren. Vorzugsweise berührt jedes Abdichtungselement ein Abdichtungselement einer benachbarten Befestigungseinrichtung.

Der Kühler weist gemäß einer weiteren Ausführungsform eine Leitung zum Leiten eines Trenngases zu der Trennvorrichtung auf. Vorzugsweise mündet die Leitung in einem Trenngaseinlass innerhalb des Kühlgasraums, wobei der Trenngaseinlass derart angeordnet ist, dass Trenngas durch den Trenngaseinlass zu der Trennvorrichtung strömt. Der Trenngaseinlass ist beispielsweise in dem dynamischen Rost / statischen Rost oder an der Decke des Kühlgasraums angeordnet. Bei dem Trenngas handelt es sich beispielsweise um CO2. Das Einleiten von Trenngas in der Nähe der Trennvorrichtung bietet eine zusätzliche Gasbarriere, um einen Gasaustausch der Kühlgasraumabschnitte zu verhindern. Der Eintritt von CO2 als Trenngas in den ersten Kühlgasraumabschnitt und somit anschließend in den Drehrohrofen als Verbrennungsgas ist prozesstechnisch unbedenklich.

Es ist ebenfalls denkbar, dass die Leitung zum Leiten des Trenngases durch zumindest einige der Abdichtungselemente verläuft. Beispielsweise sind die Abdichtungselemente hohl ausgebildet oder weisen eine Bohrung zum Leiten des Trenngases auf. Das Trenngas wird vorzugsweise durch die Aufhängung der Trennvorrichtung an der Kühlerdecke dergestalt eingebracht, dass es durch die Aufhängungselemente oder die Abdichtungselemente hindurchgepresst wird, sodass der erwärmte Trenngasstrom an dem unteren Ende der Trennvorrichtung in den zweiten Kühlgasraum eintritt.

Vorzugsweise ist an der Decke des Kühlgasraums zumindest ein Trenngasauslass angeordnet, durch welchen das Trenngas den Kühlgasraum verlässt. Insbesondere ist der Trenngasauslass mit einem Ventilator zum Abziehen des Trenngases aus dem Kühlgasraum verbunden.

Der erste Kühlgasraumabschnitt weist vorzugsweise einen höheren Gasdruck auf als der zweite Kühlgasraumabschnitt. Dies verhindert zuverlässig ein Strömen von Kühlgas des zweiten Kühlgasraumabschnitts in den ersten Kühlgasraumabschnitt.

Der Kühler weist gemäß einer weiteren Ausführungsform eine Mehrzahl von Trennvorrichtungen auf, die in Förderrichtung des Schüttguts hintereinander angeordnet sind. Beispielsweise sind die Trennvorrichtungen gleichmäßig zueinander beabstandet angebracht. Die Mehrzahl von Trennvorrichtungen ermöglicht, dass bei dem Bruch einzelner Abdichtungselemente weiterhin eine ausreichende Dichtwirkung erreicht wird. Der Austausch der kompletten Trennvorrichtung kann in der Weise durchgeführt werden, dass die Dichtfunktion auch im Betrieb während des Austauschs einer oder mehrerer Trennvorrichtungen gewährleistet werden kann, dergestalt, dass die neue unbeschädigte Trennvorrichtung vom Prozessraum vorgelegt wird und danach die beschädigte Trennvorrichtung aus dem Prozessraum entnommen wird. Es ist ebenfalls denkbar, dass zwischen zwei benachbarten Trennvorrichtungen eine oder eine Mehrzahl von Feuerfestmatten angebracht sind, die vorzugsweise nach Art eines Vorhangs an der Decke oder an den zwei benachbarten Trennvorrichtungen angebracht sind und sich zumindest bis zur Oberfläche des Schüttguts erstrecken. Beispielsweise sind die Feuerfestmatten aus einem Keramikgewebe oder Keramikfasern ausgebildet.

Die Trennvorrichtung ist vorzugsweise durch eine in einer Seitenwand des Kühlgasraums angeordnete Öffnung seitlich aus dem Kühlgasraum bewegbar, vorzugsweise entnehmbar. Beispielsweise kann die Trennvorrichtung über die Decke ausgewechselt werden. Vorzugsweise ist die Trennvorrichtung seitlich bewegbar, insbesondere quer zur Strömungsrichtung des Schüttguts, an der Decke des Kühlgasraums angebracht. Die Trennvorrichtung ist beispielsweise nach Art eines Rolladen in ein beispielsweise innerhalb der Decke angeordneten Kasten aufrollbar.

Zwischen zwei benachbarten Trennvorrichtungen ist gemäß einer weiteren Ausführungsform eine Leitung zum Leiten eines Trenngases in den Kühlgasraum angeordnet. Vorzugsweise ist der Trenngaseinlass an der Decke des Kühlgasraums zwischen zwei benachbarten Trennvorrichtungen angebracht. Eine Mehrzahl von Trennvorrichtungen mit Trenngas zwischen benachbarten Trennvorrichtungen bietet einen zuverlässigen Schutz vor einer Durchmischung der Kühlgasströme der Kühlgasraumabschnitte.

Die Erfindung umfasst auch eine Zementherstellungsanlage aufweisend in Strömungsrichtung des Materials einen Vorwärmer zum Vorwärmen des Materials, einen Drehrohrofen zum Brennen des Materials zu Klinker und einen Kühler wie vorangehend beschrieben.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines Kühlers in einer Längsschnittansicht gemäß einem Ausführungsbeispiel.
- Fig. 2: zeigt eine schematische Darstellung der Trennvorrichtung gemäß einem Ausführungsbeispiel.
- Fig. 3: zeigt eine schematische Darstellung eines Ausschnitts des Kühlers in einer Querschnittansicht der Fig. 1.
- Fig. 4: zeigt eine schematische Darstellung eines Ausschnitts des Kühlers mit mehreren hintereinander angeordneten Trennvorrichtungen in einer Längsschnittansicht gemäß einem weiteren Ausführungsbeispiel.
- Fig. 5 und 7: zeigt eine schematische Darstellung eines Abdichtungselements in einer perspektivischen Ansicht gemäß einer weiteren Ausführungsform.
- Fig. 6 und 8: zeigt eine schematische Darstellung eines Ausschnitts einer Trennvorrichtung mit miteinander verbundenen Abdichtungselementen in einer perspektivischen Ansicht gemäß einer weiteren Ausführungsform.
- Fig. 9: zeigt eine schematische Darstellung eines Abdichtungselements in einer perspektivischen Ansicht gemäß einer weiteren Ausführungsform.
- Fig. 10: zeigt eine schematische Darstellung eines Ausschnitts einer Trennvorrichtung mit miteinander verbundenen Abdichtungselementen in einer perspektivischen und einer Seitenansicht gemäß einer weiteren Ausführungsform.

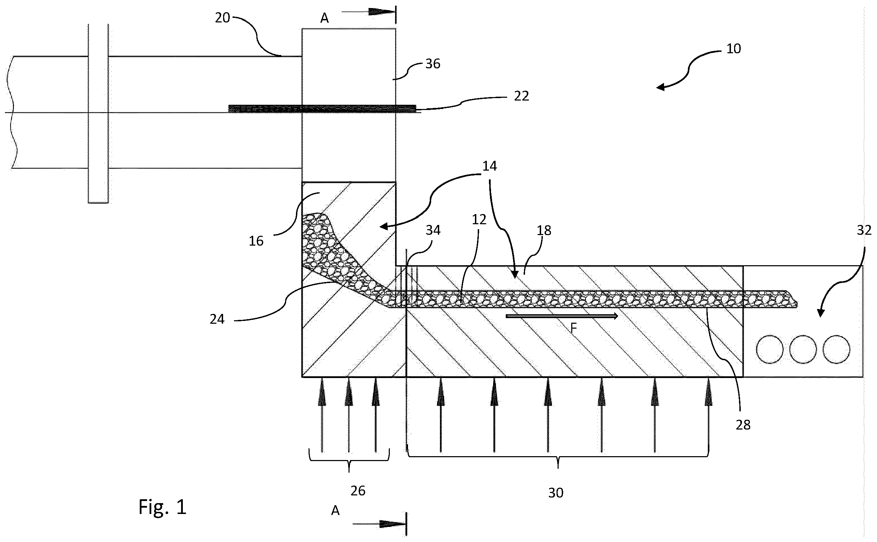

Fig. 1 zeigt einen Kühler 10 zum Kühlen von Schüttgut 12, wie beispielsweise Zementklinker. Der Kühler 10 weist einen Kühlgasraum 14 auf, in dem das Schüttgut 12 durch einen Kühlgasstrom gekühlt wird. Das Schüttgut 12 wird In Förderrichtung F durch den Kühlgasraum 14 gefördert.

Der Kühlgasraum 14 weist einen ersten Kühlgasraumabschnitt 16 und einen zweiten Kühlgasraumabschnitt 18 auf, der sich in Förderrichtung F an den ersten Kühlgasraumabschnitt 16 anschließt. Der Kühler 10 ist vorzugsweise Teil einer Zementherstellungsanlage mit einem nicht dargestellten Vorwärmer zur Vorwärmung von Rohmehl mit einer Mehrzahl von Zyklonen und einem sich an den Vorwärmer anschließenden Drehrohrofen 20 zum Brennen des Materials zu Zementklinker. Der in dem Drehrohrofen 20 gebrannte Zementklinker wird anschließend in dem Kühler 10 gekühlt. An dem materialauslassseitigen Ende des Drehrohrofens 20 ist der Ofenkopf 36 angeordnet und mit dem Kühlereinlass verbunden. Der Drehrohrofen 20 ist in Förderrichtung des Klinkers geneigt und über den Ofenkopf 36 mit dem Kühler 10 verbunden, sodass der in dem Drehrohrofen 20 gebrannte Klinker in den Kühler 10 fällt. Der Drehrohrofen 20 weist in dem Ofenkopf 36 einen Brenner 22 zum Brennen des Materials auf, der sich von dem Ofenkopf 36 in den Drehrohrofen 20 erstreckt. Der über verschiedene Brenner in die Drehrohrofenanlage aufgegebene Brennstoff wird zusammen mit einem Verbrennungsgas verbrannt, wobei es sich bei dem Verbrennungsgas vorzugsweise um reinen Sauerstoff handelt. Dies führt zu einem Abgas, das im Wesentlichen aus CO2 und Wasserdampf besteht und weist den Vorteil auf, dass auf aufwändige nachgeschaltete Reinigungsverfahren zur Abgasreinigung verzichtet werden kann. Des Weiteren wird eine Reduktion der Prozessgasmengen erreicht, sodass die Anlage erheblich kleiner dimensioniert werden kann.

Der erste Kühlgasraumabschnitt 16 ist unterhalb des Materialauslasses des Drehrohrofens 20 angeordnet, sodass das Schüttgut 12 von dem Drehrohrofen 20 in den ersten Kühlgasraumabschnitt 16 fällt. Der erste Kühlgasraumabschnitt 16 stellt einen Einlaufbereich des Kühlers dar und weist vorzugsweise einen statischen Rost 24 auf, der das aus dem Drehrohrofen 20 austretende Schüttgut aufnimmt. Der statische Rost 24 ist insbesondere vollständig in dem ersten Kühlgasraumabschnitt 16 des Kühlers 10 angeordnet. Vorzugsweise fällt das Schüttgut 12 aus dem Ofen 20 direkt auf den statischen Rost 24. Der statische Rost 24 erstreckt sich vorzugsweise vollständig in einem Winkel von 10° bis 35°, vorzugsweise 14° bis 33°, insbesondere 21 bis 25 zur Horizontalen, sodass das Schüttgut 12 in Förderrichtung entlang des statischen Rostes 24 auf diesem gleitet.

An den ersten Kühlgasraumabschnitt 16, schließt sich der zweiter Kühlgasraumabschnitt 18 des Kühlers 10 an. In dem ersten Kühlgasraumabschnitt 16 des Kühlers 10 wird das Schüttgut 12 insbesondere auf eine Temperatur von weniger als 1100°C abgekühlt, wobei die Abkühlung derart erfolgt, dass ein vollständiges Erstarren von in dem Schüttgut 12 vorhandenen flüssigen Phasen in feste Phasen erfolgt. Beim Verlassen des ersten Kühlgasraumabschnitt 16 des Kühlers 10 liegt das Schüttgut 12 vorzugsweise vollständig in der festen Phase und einer Temperatur von maximal 1100°C vor. In dem zweiten Kühlgasraumabschnitt 18 des Kühlers 10 wird das Schüttgut weiter abgekühlt, vorzugsweise auf eine Temperatur von weniger als 100°C. Vorzugsweise kann der zweite Kühlgasstrom auf mehrere Teilgasströme aufgeteilt werden, die unterschiedliche Temperaturen aufweisen.

Der statische Rost des ersten Kühlgasraumabschnitts 16 weist beispielsweise Durchlässe auf, durch welche ein Kühlgas in den Kühler 10 und das Schüttgut 12 eintritt. Das Kühlgas wird beispielsweise durch wenigstens einen unterhalb des statischen Rosts angeordneten Ventilator erzeugt, sodass ein erster Kühlgasstrom 26 von unten durch den statischen Rost in den ersten Kühlgasraumabschnitt 16 strömt. Bei dem ersten Kühlgasstrom handelt es sich beispielsweise um reinen Sauerstoff oder ein Gas mit einem Anteil von 15 Vol% oder weniger Stickstoff und einem Anteil von 50 Vol% oder mehr Sauerstoff.

Innerhalb des Kühlers 10 wird das zu kühlende Schüttgut 12 in Förderrichtung F bewegt. Der zweite Kühlgasraumabschnitt 18 weist vorzugsweise einen dynamischen, insbesondere bewegbaren, Rost 28 auf, der sich in Förderrichtung F an den statischen Rost 24 anschließt. Der dynamische Rost 28 weist insbesondere eine Fördereinheit auf, die das Schüttgut 12 in Förderrichtung F transportiert. Bei der Fördereinheit handelt es sich beispielsweise um einen Schubbodenförderer, der eine Mehrzahl von Förderelementen zum Transport des Schüttguts aufweist. Bei den Förderelementen handelt es sich bei einem Schubbodenförderer um eine Mehrzahl von Planken, vorzugsweise Rostplanken, die einen Belüftungsboden ausbilden. Die Förderelemente sind nebeneinander angeordnet und in Förderrichtung F und entgegen der Förderrichtung F bewegbar. Die als Förderplanken oder Rostplanken ausgebildeten Förderelemente sind vorzugsweise von Kühlgasstrom durchströmbar, über die gesamte Länge des zweiten Kühlgasraumabschnitt 18 des Kühlers 10 angeordnet und bilden die Oberfläche aus, auf der das Schüttgut 12 aufliegt. Die Fördereinheit kann auch ein Schubförderer sein, wobei die Fördereinheit einen stationären von Kühlgasstrom durchströmbaren Belüftungsboden und eine Mehrzahl von relativ zu dem Belüftungsboden bewegbaren Förderelementen aufweist. Die Förderelemente des Schubförderers sind vorzugsweise oberhalb des Belüftungsbodens angeordnet und weisen quer zur Förderrichtung verlaufende Mitnehmer auf. Zum Transport des Schüttguts 12 entlang des Belüftungsbodens sind die Förderelemente in Förderrichtung F und entgegen der Förderrichtung F bewegbar. Die Förderelemente des Schubförderers und des Schubbodenförderers können nach dem "walking-floor-Prinzip" bewegbar sein, wobei die Förderelemente alle gleichzeitig in Förderrichtung und ungleichzeitig entgegen der Förderrichtung bewegt werden. Alternativ dazu sind auch andere Förderprinzipien aus der Schüttguttechnik denkbar.

Unterhalb des dynamischen Rosts 28 sind beispielhaft eine Mehrzahl von Ventilatoren angeordnet, mittels welcher der zweite Kühlgasstrom 30 von unten durch den dynamischen Rost 28 geblasen wird. Bei dem zweiten Kühlgasstrom handelt es sich beispielsweise um Luft.

An den dynamischen Rost 28 des zweiten Kühlgasraumabschnitts 18 schließt sich in Fig. 1 beispielhaft eine Zerkleinerungseinrichtung 32 an. Bei der Zerkleinerungseinrichtung 32 handelt es sich beispielsweise um einen Brecher mit zumindest zwei gegenläufig rotierbaren Brechwalzen und einem zwischen diesen ausgebildeten Brechspalt, in dem die Zerkleinerung des Materials stattfindet. An die Zerkleinerungseinrichtung 32 kann sich beispielsweise ein nicht dargestellter dritter Kühlgasraumabschnitt des Kühlers 10 zum weiteren Kühlen des Schüttguts 12 anschließen. Vorzugsweise weist bei einer solchen Ausgestaltung das Schüttgut 12 bei Eintritt in den dritten Bereich des Kühlers 10 eine Temperatur von mehr als 100°C auf. Vorzugsweise weist das Schüttgut beim Verlassen des Kühlers 10 eine Temperatur von 100°C oder weniger auf.

Der Kühler 10 weist des Weiteren eine Trennvorrichtung 34 auf, die zwischen dem ersten Kühlgasraumabschnitt 16 und dem zweiten Kühlgasraumabschnitt 18 angeordnet ist und dazu dient, die Kühlgasraumabschnitte 16, 18 gastechnisch voneinander zu trennen, sodass zwischen den Kühlgasraumabschnitten 16, 18 kein oder nur ein sehr geringer, vorzugsweise vernachlässigbarer, Gasaustausch stattfindet.

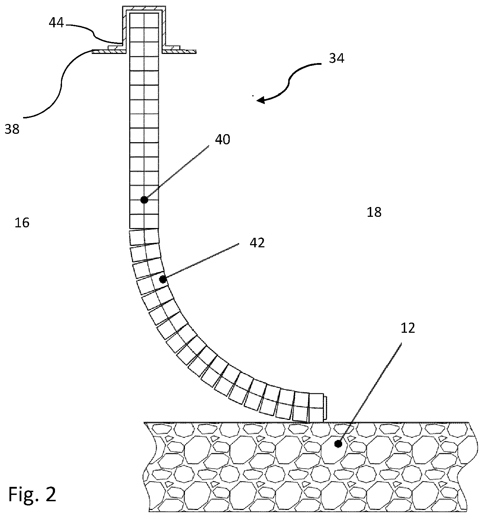

Fig. 2 bis 4 zeigen detailliertere Ansichten der Trennvorrichtung 34 und dessen Anordnung in dem Kühler 10. In Fig. 2 ist die Trennvorrichtung 34 gezeigt, durch welche die Kühlgasraumabschnitte 16 und 18 voneinander getrennt sind. Die Trennvorrichtung 34 liegt mit ihrem unteren Bereich auf der Oberfläche des Schüttguts 12 auf. Das dem Schüttgut 12 gegenüberliegende Ende der Trennvorrichtung 34 ist beispielhaft an der Decke 38 des Kühlgasraums 14 des Kühlers 10 angebracht. Es ist ebenfalls denkbar, die Trennvorrichtung 34 an einer anderen Komponente des Kühlers 10, vorzugsweise innerhalb des Kühlgasraums 14 anzubringen.

Die Trennvorrichtung 34 weist zumindest ein oder eine Mehrzahl von Aufhängungselementen 40 auf, an dem jeweils eine Mehrzahl von Abdichtungselementen 42 angebracht sind. Beispielhaft ist in Fig. 2 eine Kette oder ein Seil als Aufhängungselement 40 gezeigt. Es ist ebenfalls denkbar, dass es sich bei dem Aufhängungselement um einen Stab, eine Drahtmatte und/ oder ein Rohr handelt. Bei den Abdichtungselementen 42 handelt es sich in dem Ausführungsbeispiel der Fig. 2 beispielhaft um Kreisscheiben, beispielsweise zylindrische Elemente mit einer Mittenöffnung, die an einem Seil angebracht, insbesondere aufgefädelt sind. Die Abdichtungselemente können beispielsweise kubisch oder kugelförmig sein oder einen rechteckigen, dreieckigen oder mehreckigen Querschnitt aufweisen. Die Abdichtungselemente 34 liegen beispielsweise aneinander an und sind nicht miteinander befestigt. Das Befestigungsmittel 42 erstreckt sich vorzugsweise durch den Mittelpunkt, insbesondere den Schwerpunkt der Abdichtungselemente 42. Insbesondere erstreckt sich das Aufhängungselement 40 durch in den Abdichtungselementen 42 ausgebildeten Bohrungen, sodass die Abdichtungselemente 42 relativ zu dem Aufhängungselement 40 und vorzugweise zueinander an dem Aufhängungselement 40 angebracht, insbesondere auf diesem aufgefädelt sind. An dem unteren, schüttgutseitigen Ende des Aufhängungselements 40 ist beispielhaft eine Haltevorrichtung angebracht, die ein Herabrutschen der Abdichtungselemente 42 von dem Aufhängungselement 40 verhindert. An dem gegenüberliegenden Ende ist das Aufhängungselement 40 beispielhaft mittels eines Befestigungsmittels 44, wie einer Klemme, an der Decke 38 angebracht.

Die Abdichtungselemente 42 weisen vorzugsweise eine Höhe auf, die wesentlich geringer ist, als der Abstand zwischen der Schüttgutoberfläche und der Decke des Kühlgasraums 12. Insbesondere weisen die Abdichtungselemente 42 eine Höhe von etwa 2 bis 20cm, vorzugsweise 5 bis 15cm, insbesondere 10cm auf. Vorzugsweise ist eine Vielzahl von beispielsweise mindestens 10, vorzugsweise mindestens 50, insbesondere mindestens 100 Abdichtungselementen 42 an einem Aufhängungselement 40 angebracht. Die Trennvorrichtung 34 umfasst beispielsweise eine Mehrzahl von Aufhängungselementen 40 mit jeweils einer Mehrzahl von Abdichtungselementen 42. In dem Ausführungsbeispiel der Fig. 2 sind vorzugsweise eine Mehrzahl von Aufhängungselementen 40 mit jeweils Abdichtungselementen 42 nebeneinander über den gesamten Querschnitt des Kühlgasraums 14 angebracht, sodass sich die Abdichtungselemente 42 benachbarter Aufhängungselemente 40 berühren.

Die Trennvorrichtung 42 erstreckt sich vorzugsweise über den gesamten Querschnitt des Kühlgasraums 14. Es ist ebenfalls denkbar, dass die Trennvorrichtung genau ein Aufhängungselement 40 aufweist, an dem eine Mehrzahl von Abdichtungselementen 42 angebracht sind. In diesem Fall ist das Aufhängungselement 40 beispielsweise eine Drahtmatte, die sich vorzugsweise über den gesamten Querschnitt des Kühlgasraums 14 erstreckt.

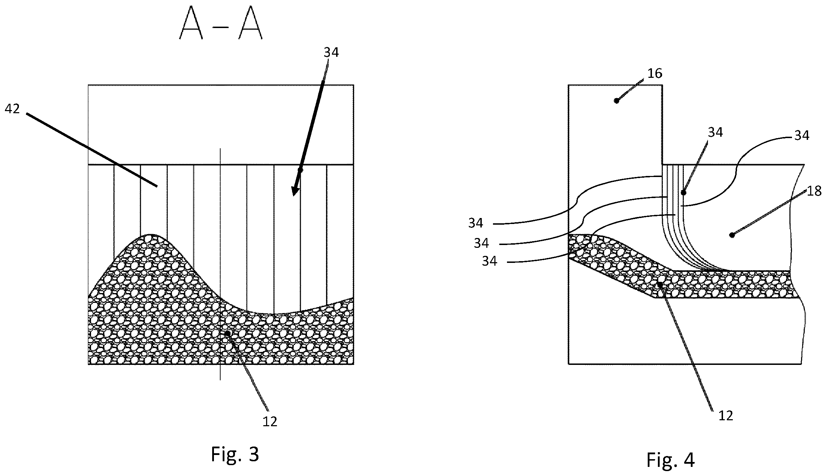

Fig. 3 zeigt die Trennvorrichtung in der Schnittansicht A-A der Fig. 1, wobei gleiche Elemente mit gleichen Bezugszeichen versehen sind. Die Trennvorrichtung 34 der Fig. 3 weist eine Mehrzahl, beispielhaft zehn, Aufhängungselemente 40 mit Abdichtungselementen 42 auf, die nebeneinander angeordnet sind, sodass sich die Abdichtungselemente 42 benachbarter Aufhängungselemente 40 berühren und der gesamte Querschnitt des Kühlgasraums 14 vollständig von der Trennvorrichtung 34 bedeckt ist, sodass vorzugsweise kein Kühlgas durch die Trennvorrichtung 34 hindurch strömen kann.

Fig. 4 zeigt eine weitere Ausführungsform eines Kühlers 10 mit einer Trennvorrichtung 34, wobei im Unterschied zu Fig. 1 mehrere Trennvorrichtungen 34 in Förderrichtung F des Schüttguts hintereinander angeordnet sind. Die Trennvorrichtungen 34 sind jeweils vorzugsweise wie vorangehend beschrieben ausgebildet und insbesondere parallel zueinander angeordnet. Beispielhaft weist der Kühler 10 der Fig. 4 fünf Trennvorrichtungen 34 auf. Optional ist zwischen zwei benachbarten Trennvorrichtungen 34 ein in Fig. 4 nicht dargestellter Trenngaseinlass zum Einlassen eines Trenngases, wie beispielsweise CO2, in den Kühlgasraum 18 möglich.

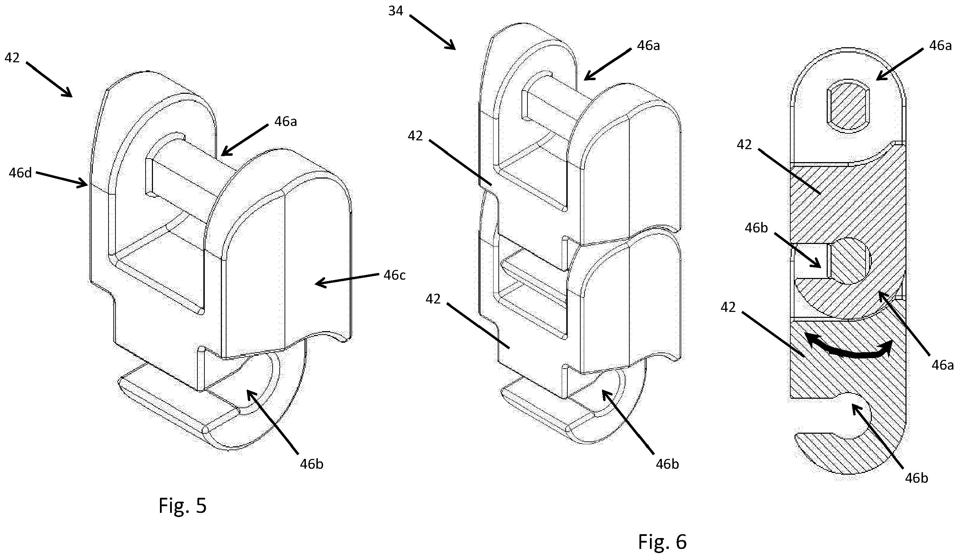

Fig. 5 zeigt ein Ausführungsbeispiel eines Abdichtungselements 42 und Fig. 6 zeigt einen Ausschnitt einer Trennvorrichtung 34 mit zwei Abdichtungselementen 42 gemäß Fig. 5. Das Abdichtungselement 42 weist beispielhaft eine Mehrzahl von Verbindungsbereichen 46a-d auf. Die Verbindungsbereiche 46a-d bilden zumindest ein Teil oder die vollständige Oberfläche des Abdichtungselements 42 aus. Die Verbindungsbereiche 46a-d sind vorzugsweise komplementär zu Verbindungsbereichen 46a-d benachbarter Abdichtungselemente 42 ausgebildet, sodass die Verbindungsbereiche 46a-d benachbarter Abdichtungselemente 42 vorzugsweise aneinander anliegen und eine zumindest teilweise gasdichte Verbindung ausbilden.

Beispielhaft weist das Abdichtungselement 42 der Fig. 5 einen oberen Verbindungsbereich 46a auf zum Verbinden des Abdichtungselements 42 mit einem darüber liegenden weiteren Abdichtungselement 42. Der obere Verbindungsbereich 46a weist beispielsweise eine Ausbuchtung und einen darin angeordneten im Wesentlichen horizontalen Steg auf. Der Steg ist beispielhaft seitlich abgeflacht. Das Abdichtungselement 42 weist auch einen unteren Verbindungsbereich 46b auf zum Verbinden des Abdichtungselements 42 mit einem darunterliegenden weiteren Abdichtungselement 42. Der untere Verbindungsbereich 46b weist vorzugsweise hakenform auf, die derart ausgebildet ist, dass sie in den oberen Verbindungsbereich 46a, insbesondere den Steg und die Ausbuchtung, eines darunter angeordneten Abdichtungselements 42 eingreifen kann. Vorzugsweise werden die Verbindungsbereiche 46a benachbarter Abdichtungselemente 42 nach dem Prinzip einer Bajonette-Verbindung miteinander verbunden, sodass sie vorzugsweise um den Steg drehbar sind. Zwei miteinander verbundene Abdichtungselemente 42 sind in Fig. 6 dargestellt. Beispielhaft sind lediglich die in vertikaler Richtung benachbarten Abdichtungselemente 42 fest, insbesondere formschlüssig, miteinander verbunden, wobei die in horizontaler Richtung nebeneinanderliegenden Abdichtungselemente 42 lediglich mit den jeweiligen seitlichen Verbindungsbereichen 46c, d aneinander anliegen. Bei den seitlichen Verbindungsbereichen 46c, d handelt es sich beispielweise um die in horizontaler Richtung weisenden Seitenflächen des Abdichtungselements 42. Es ist ebenfalls denkbar, dass lediglich ein Verbindungsbereich 46a-d oder alle Verbindungsbereiche 46a-d formschlüssig mit einem Verbindungsbereich 46a-d eines benachbarten Abdichtungselements 42 verbunden sind. Die Trennvorrichtung 34 weist vorzugsweise eine Vielzahl von miteinander verbundenen Abdichtungselementen 42 auf. Insbesondere weisen alle Abdichtungselemente 42 der Trennvorrichtung 34 die gleiche Gestalt auf.

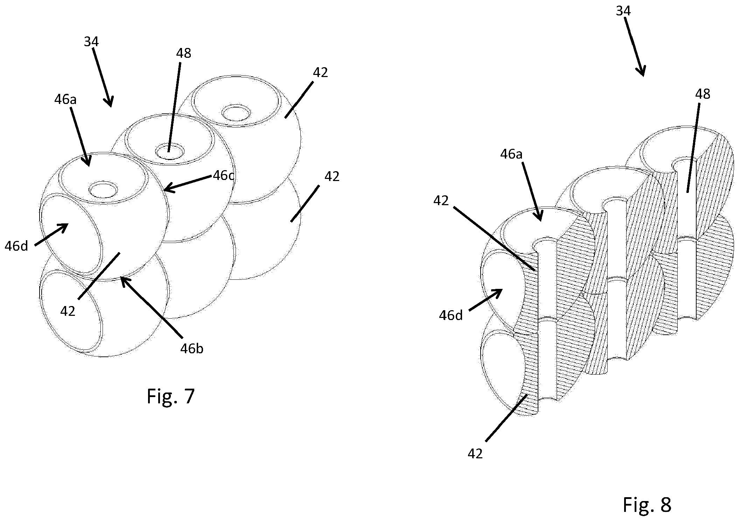

Fig. 7 zeigt einen Ausschnitt einer Trennvorrichtung 34 mit beispielhaft sechs Abdichtungselementen 42. Fig. 8 zeigt eine Schnittansicht der Fig. 7. Wie mit Bezug auf Fig. 5 und 6 beschrieben, weist auch jedes Abdichtungselement 42 der Fig. 7 eine Mehrzahl von Verbindungsbereichen 46a-d auf, die beispielhaft an einem Abdichtungselement 42 kenntlich gemacht sind. Die Verbindungsbereiche 46a-d der Abdichtungselemente 42 sind beispielhaft konvexe, insbesondere halbkugelförmige Vorsprünge oder konkave, insbesondere halbkugelförmige Ausbuchtungen, die an der jeweils komplementär ausgebildeten Verbindungsfläche 46a-d eines benachbarten Abdichtungselements 42 anliegt. Davon abweichende Ausgestaltungen der Verbindungsbereiche 46a-d sind ebenfalls denkbar.

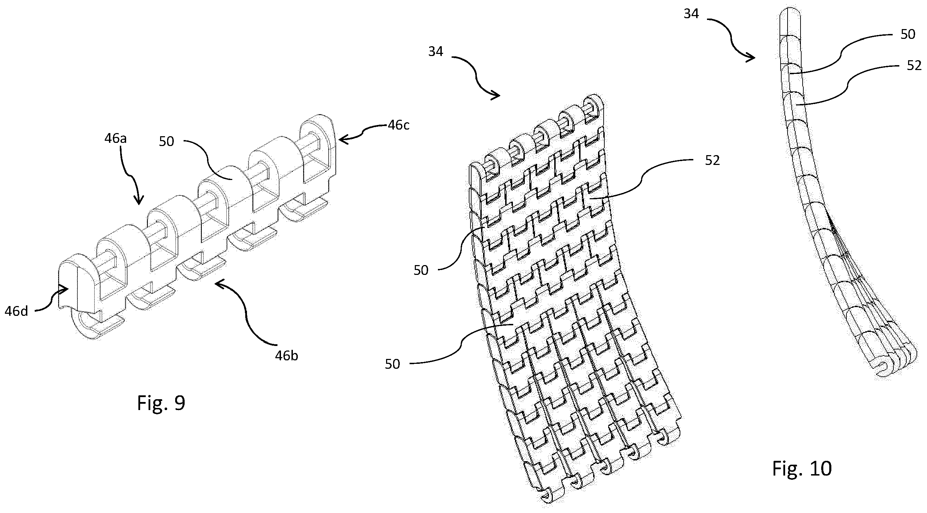

Zusätzlich sind die Abdichtungselemente 42 der Fig. 7 miteinander über ein nicht dargestelltes Aufhängungselement 40 verbunden. Jedes Abdichtungselement 42 weist eine, insbesondere vertikal verlaufende, Durchgangsbohrung 48 auf, durch welche sich vorzugsweise jeweils ein mit Bezug auf die Figuren 1 bis 4 beschriebenes Aufhängungselement 40 erstreckt. Durch die Durchgangsbohrungen 48 kann auch Kühlluft geführt werden. Die Durchgangsbohrungen 48 können dazu auch konisch ausgeführt werden, sodass die Verbindung der Durchgangsbohrungen 48 zueinander in Bezug auf die Kühlluft auch im ausgelenkten Zustand der Trennvorrichtung funktioniert. Fig. 9 zeigt ein weiteres Ausführungsbeispiel eines Abdichtungselements 50 und Fig. 10 zeigt einen Ausschnitt einer Trennvorrichtung 34 mit einer Mehrzahl von Abdichtungselementen 50 und 52 gemäß Fig. 5 und 9. Die in Fig. 10 abgebildete Trennvorrichtung 34 weist eine Mehrzahl von unterschiedlich ausgebildeten Abdichtungselementen 50, 52 auf, die eine Mehrzahl von Abdichtungselementen 50 einer ersten Gestalt und Abdichtungselementen 52 einer zweiten Gestalt umfasst. Das in Fig. 9 dargestellte erste Abdichtungselement 50 weist wie mit Bezug auf Fig. 5 bis 8 beschrieben, eine Mehrzahl von Verbindungsbereichen 46a-d auf. Fig. 10 zeigt, dass die Verbindungsbereiche 46a und b des Abdichtungselements 50 jeweils mit einer Mehrzahl von weiteren Abdichtungselementen 52 verbunden sind. Beispielhaft entsprechen die Abdichtungselemente 52 der zweiten Gestalt den in Fig. 5 und 6 dargestellten Abdichtungselementen 50. Die Abdichtungselemente 50 der ersten Gestalt weisen eine Länge auf, die beispielhaft einer Länge von fünf Abdichtungselementen 52 der zweiten Gestalt entspricht. Die Abdichtungselemente 50 der ersten Gestalt sind beispielhaft lediglich in dem oberen, zur Kühlerdecke gerichteten Bereich der Trennvorrichtung 34 angeordnet. Die Abdichtungselemente 50, 52 sind in Fig. 10 beispielhaft abwechselnd in Reihe angeordnet. Beispielsweise sind die Abdichtungselemente 50 der ersten Gestalt ausschließlich in der oberen Hälfte der Trennvorrichtung 34 angebracht. Dies ermöglicht eine höhere Beweglichkeit des unteren Bereichs der Trennvorrichtung 34, die zumindest teilweise auf dem Schüttgut aufliegt.

### Bezugszeichenliste

- 10: Kühler
- 12: Schüttgut
- 14: Kühlgasraum
- 16: erster Kühlgasraumabschnitt des Kühlgasraums 14
- 18: zweiter Kühlgasraumabschnitt des Kühlgasraums 14
- 20: Drehrohrofen
- 22: Brenner
- 24: statischer Rost
- 26: erster Kühlgasstrom
- 28: dynamischer Rost
- 30: zweiter Kühlgasstrom
- 32: Zerkleinerungseinrichtung
- 34: Trennvorrichtung
- 36: Ofenkopf
- 38: Decke des Kühlgasraums 14
- 40: Aufhängungselement
- 42: Abdichtungselement
- 44: Befestigungsmittels
- 46a-d: Verbindungsbereich
- 48: Durchgangsbohrung
- 50: erstes Abdichtungselement
- 52: zweites Abdichtungselement

- F: Förderrichtung

## Patentansprüche

1. Kühler (10) zum Kühlen von Schüttgut (12), insbesondere Zementklinker, aufweisend
einen Kühlgasraum (14), durch den ein Kühlgasstrom zum Kühlen des Schüttguts (12) im Querstrom strömbar ist und
eine Fördereinrichtung zum Fördern des Schüttguts (12) in Förderrichtung (F) durch den Kühlgasraum (14),
wobei der Kühlgasraum (14), einen ersten Kühlgasraumabschnitt (16) mit einem ersten Kühlgasstrom (26) und einen sich in Förderrichtung (F) des Schüttguts (12) an diesen anschließenden zweiten Kühlgasraumabschnitt (18) mit einem zweiten Kühlgasstrom (30) umfasst,
wobei der Kühler (10) eine Trennvorrichtung (34) zur gastechnischen Trennung der Kühlgasraumabschnitte (16, 18) voneinander aufweist,
**dadurch gekennzeichnet, dass**
sich die Trennvorrichtung (34) quer zur Förderrichtung (F) des Schüttguts erstreckt und eine Mehrzahl von Abdichtungselementen (42) und zumindest ein Aufhängungselement (40) aufweist, an dem eine Mehrzahl von Abdichtungselementen (42) angebracht sind und wobei die Abdichtungselemente (42) derart nebeneinander angeordnet sind, dass sie den Querschnitt des Kühlgasraums (14) überdecken.

2. Kühler (10) nach Anspruch 1, wobei jedes Abdichtungselement (42) jeweils eine Mehrzahl von Verbindungsbereichen (46a-d) aufweist, die jeweils an zumindest einem Verbindungsbereich (46a-d) eines benachbarten Abdichtungselements (42) anliegen.

3. Kühler (10) nach Anspruch 2, wobei die aneinander anliegenden Verbindungsbereiche (46a-d) benachbarter Abdichtungselemente (42) komplementär ausgebildet sind.

4. Kühler (10) nach einem der Ansprüche 2 oder 3, wobei jedes Abdichtungselement (42) über einen seiner Verbindungsbereiche (46a-d) mit zumindest einem benachbarten Abdichtungselement (42) fest, insbesondere formschlüssig, verbunden ist.

5. Kühler (10) nach einem der vorangehenden Ansprüchen, wobei die Trennvorrichtung (34) eine Mehrzahl von Abdichtungselementen (50) einer ersten Gestalt und eine Mehrzahl von Abdichtungselementen (52) einer zweiten Gestalt aufweist.

6. Kühler nach Anspruch 5, wobei das Aufhängungselement (40) eine Kette, einen Stab, ein Seil, eine Drahtmatte und/ oder ein Rohr umfasst.

7. Kühler (10) nach einem der vorangehenden Ansprüche, wobei sich die Trennvorrichtung (34) über den gesamten Querschnitt des Kühlgasraums (14) erstreckt.

8. Kühler (10) nach einem der vorangehenden Ansprüche, wobei die Trennvorrichtung (34) zumindest teilweise auf dem Schüttgut (12) aufliegt.

9. Kühler (10) nach einem der vorangehenden Ansprüche, wobei der erste Kühlgasstrom (26) aus reinem Sauerstoff oder einem Gas mit einem Anteil von weniger als 35 Vol%, insbesondere weniger als 21 Vol%, vorzugsweise 15 Vol% oder weniger Stickstoff und einem Anteil von 50 Vol% oder mehr Sauerstoff besteht.

10. Kühler (10) nach einem der vorangehenden Ansprüche, wobei die Abdichtungselemente (42) relativ zu den Aufhängungselementen (40) bewegbar an diesem angebracht sind.

11. Kühler (10) nach einem der vorangehenden Ansprüche, wobei jede Trennvorrichtung (34) eine Mehrzahl von Aufhängungselementen (40) mit jeweils einer Mehrzahl von Abdichtungselementen (42) aufweist.

12. Kühler (10) nach einem der vorangehenden Ansprüche, wobei der Kühler (10) eine Leitung zum Leiten eines Trenngases zu der Trennvorrichtung (34) aufweist.

13. Kühler (10) nach einem der vorangehenden Ansprüche, wobei der Kühler (10) eine Mehrzahl von Trennvorrichtungen (34) aufweist, die in Förderrichtung (F) des Schüttguts (12) hintereinander angeordnet sind.

14. Kühler (10) nach Anspruch 13, wobei zwischen zwei benachbarten Trennvorrichtungen (34) eine Leitung zum Leiten eines Trenngases in den Kühlgasraum (14) angeordnet ist.

## Claims

1. A cooler (10) for cooling bulk material (12), in particular cement clinker, having
a cooling gas chamber (14), through which a cooling gas stream for cooling the bulk material (12) can flow in crosscurrent, and
a conveying device for conveying the bulk material (12) through the cooling gas chamber (14) in a conveying direction (F),
wherein the cooling gas chamber (14) comprises a first cooling gas chamber portion (16) with a first cooling gas stream (26) and a second cooling gas chamber portion (18), adjoining said first cooling gas chamber portion in a conveying direction (F) of the bulk material (12), with a second cooling gas stream (30),
wherein the cooler (10) has a separating apparatus (34) for gastight separation of the cooling gas chamber portions (16, 18) from one another,
**characterized in that**
the separating apparatus (34) extends transversely with respect to the conveying direction (F) of the bulk material and has a plurality of sealing elements (42) and at least one suspension element (40), to which a plurality of sealing elements (42) are attached, and wherein the sealing elements (42) are arranged next to one another in such a way that they cover the cross section of the cooling gas chamber (14).

2. The cooler (10) as claimed in claim 1, wherein each sealing element (42) has a plurality of connection regions (46a-d), each of which bears against at least one connection region (46a-d) of an adjacent sealing element (42).

3. The cooler (10) as claimed in claim 2, wherein the connection regions (46a-d) of adjacent sealing elements (42) that bear against one another have a complementary form.

4. The cooler (10) as claimed in either of claims 2 and 3, wherein each sealing element (42) is fixedly connected, in particular by a form fit, to at least one adjacent sealing element (42) via one of its connection regions (46a-d).

5. The cooler (10) as claimed in one of the preceding claims, wherein the separating apparatus (34) has a plurality of sealing elements (50) with a first shape and a plurality of sealing elements (52) with a second shape.

6. The cooler as claimed in claim 5, wherein the suspension element (40) comprises a chain, a rod, a cable, a wire mat and/or a pipe.

7. The cooler (10) as claimed in one of the preceding claims, wherein the separating apparatus (34) extends over the entire cross section of the cooling gas chamber (14).

8. The cooler (10) as claimed in one of the preceding claims, wherein the separating apparatus (34) at least partially rests on the bulk material (12).

9. The cooler (10) as claimed in one of the preceding claims, wherein the first cooling gas stream (26) consists of pure oxygen or a gas with a nitrogen content of less than 35% by volume, in particular less than 21% by volume, preferably 15% by volume or less and an oxygen content of 50% by volume or more.

10. The cooler (10) as claimed in one of the preceding claims, wherein the sealing elements (42) are attached to the suspension elements (40) so as to be able to move relative thereto.

11. The cooler (10) as claimed in one of the preceding claims, wherein each separating apparatus (34) has a plurality of suspension elements (40) with a respective plurality of sealing elements (42).

12. The cooler (10) as claimed in one of the preceding claims, wherein the cooler (10) has a line for conducting a separation gas to the separating apparatus (34).

13. The cooler (10) as claimed in one of the preceding claims, wherein the cooler (10) has a plurality of separating apparatuses (34), which are arranged one behind another in a conveying direction (F) of the bulk material (12).

14. The cooler (10) as claimed in claim 13, wherein a line for conducting a separation gas into the cooling gas chamber (14) is arranged between two adjacent separating apparatuses (34).

## Revendications

1. Refroidisseur (10) pour refroidir un matériau en vrac (12), notamment du clinker de ciment, présentant une chambre de gaz de refroidissement (14), à travers laquelle peut s'écouler un courant de gaz de refroidissement pour refroidir le matériau en vrac (12) en écoulement transversal, et
un appareil d'acheminement pour acheminer le matériau en vrac (12) dans la direction d'acheminement (F) à travers la chambre de gaz de refroidissement (14),
la chambre de gaz de refroidissement (14) comprenant une première section de chambre de gaz de refroidissement (16) avec un premier courant de gaz de refroidissement (26) et une deuxième section de chambre de gaz de refroidissement (18) avec un deuxième courant de gaz de refroidissement (30) se raccordant à celle-ci dans la direction d'acheminement (F) du matériau en vrac (12), le refroidisseur (10) présentant un dispositif de séparation (34) pour la séparation technique gazeuse des sections de chambre de gaz de refroidissement (16, 18) l'une de l'autre,
**caractérisé en ce que**
le dispositif de séparation (34) s'étend transversalement à la direction d'acheminement (F) du matériau en vrac et présente une pluralité d'éléments d'étanchéité (42) et au moins un élément de suspension (40) sur lequel sont disposés une pluralité d'éléments d'étanchéité (42), et dans lequel les éléments d'étanchéité (42) sont agencés côte à côte de telle sorte qu'ils recouvrent la section transversale de la chambre de gaz de refroidissement (14) .

2. Refroidisseur (10) selon la revendication 1, dans lequel chaque élément d'étanchéité (42) présente respectivement une pluralité de zones de liaison (46ad), qui s'appliquent chacune sur au moins une zone de liaison (46a-d) d'un élément d'étanchéité (42) voisin.

3. Refroidisseur (10) selon la revendication 2, dans lequel les zones de liaison (46a-d) adjacentes les unes aux autres d'éléments d'étanchéité (42) voisins sont réalisées sous forme complémentaire.

4. Refroidisseur (10) selon l'une quelconque des revendications 2 ou 3, dans lequel chaque élément d'étanchéité (42) est relié fixement, notamment par complémentarité de forme, à au moins un élément d'étanchéité (42) voisin par l'intermédiaire de l'une de ses zones de liaison (46a-d).

5. Refroidisseur (10) selon l'une quelconque des revendications précédentes, dans lequel le dispositif de séparation (34) présente une pluralité d'éléments d'étanchéité (50) d'une première forme et une pluralité d'éléments d'étanchéité (52) d'une deuxième forme.

6. Refroidisseur selon la revendication 5, dans lequel l'élément de suspension (40) comprend une chaîne, une barre, un câble, un mat de fils et/ou un tube.

7. Refroidisseur (10) selon l'une quelconque des revendications précédentes, dans lequel le dispositif de séparation (34) s'étend sur toute la section transversale de la chambre de gaz de refroidissement (14).

8. Refroidisseur (10) selon l'une quelconque des revendications précédentes, dans lequel le dispositif de séparation (34) repose au moins partiellement sur le matériau en vrac (12).

9. Refroidisseur (10) selon l'une quelconque des revendications précédentes, dans lequel le premier courant de gaz de refroidissement (26) est constitué d'oxygène pur ou d'un gaz avec une proportion de moins de 35 % en volume, notamment de moins de 21 % en volume, de préférence 15 % en volume ou moins d'azote et une proportion de 50 % en volume ou plus d'oxygène.

10. Refroidisseur (10) selon l'une quelconque des revendications précédentes, dans lequel les éléments d'étanchéité (42) sont disposés sur les éléments de suspension (40) de manière à pouvoir se déplacer par rapport à ceux-ci.

11. Refroidisseur (10) selon l'une quelconque des revendications précédentes, dans lequel chaque dispositif de séparation (34) présente une pluralité d'éléments de suspension (40), chacun avec une pluralité d'éléments d'étanchéité (42).

12. Refroidisseur (10) selon l'une quelconque des revendications précédentes, dans lequel le refroidisseur (10) présente une conduite pour conduire un gaz de séparation vers le dispositif de séparation (34).

13. Refroidisseur (10) selon l'une quelconque des revendications précédentes, dans lequel le refroidisseur (10) présente une pluralité de dispositifs de séparation (34), qui sont agencés les uns derrière les autres dans la direction d'acheminement (F) du matériau en vrac (12).

14. Refroidisseur (10) selon la revendication 13, dans lequel entre deux dispositifs de séparation voisins (34) est agencée une conduite pour conduire un gaz de séparation dans la chambre de gaz de refroidissement (14) .
